# EUROPEAN PATENT APPLICATION

(11) **EP 2 050 367 A1**
(43) Date of publication of application: **22.04.2009**
(21) Application number: 07425660.3
(22) Date of filing: 19.10.2007
(51) Int. Cl.: A47J 31/36, A47J 31/46

(54) **Automatic coffee machine**

(71) Applicant: Gruppo Cimbali S.p.A., 20082 Binasco (MI) (IT)
(72) Inventor: Sala, Dario, 20082 Binasco (MI) (IT)
(74) Representative: Perani, Aurelio

(57) **Abstract**

An automatic coffee machine (1) comprises infusion means (13) suitable for producing infused coffee, a coffee feed pipe (14) connected to the outlet of the infusion means (13), and a dispensing spout (15) having an inlet (16) connected to the coffee feed pipe (14) and an outlet (17) for dispensing the coffee into a container (20). In particular, the dispensing spout (14) comprises valve means (18) interposed between the inlet (16) and the outlet (17) of the dispensing spout (14). The valve means (18) comprise resilient means (19) having a predetermined resilient load such as to maintain the coffee present in the coffee feed pipe (14) under pressure and to permit the emergence of the coffee from the dispensing spout (15) when the pressure of the coffee in the coffee feed pipe (14) exceeds the predetermined resilient load.

## Description

The present invention relates to an automatic coffee machine according to the preamble of claim 1.

Machines for preparing coffee, particularly espresso coffee, are known in the prior art. In particular, the identifying element which visually distinguishes a coffee prepared with an espresso coffee machine is undoubtedly the creamy layer on the surface of the beverage. This extremely fine foam which, owing to its compactness and consistency is commonly defined as a cream and/or emulsion, is formed by the drawing of the hot water forced at high pressure through the ground coffee powder. The soluble substances are diffused in the water while the mixing up of the emulsion of the fats and essential oils with the aromas and with air present in the filter form the cream.

With the development of the techniques of extraction of the coffee infusion, the quality of this creamy layer has increased in consistency and fineness of texture and, although at first it was a characterizing element of espresso coffee, it then went on also to characterize other specific beverages created by the distribution of these machines in countries with a coffee consumption tradition different from that of the strong and concentrated coffee of the Mediterranean region.

For example, in the countries of Northern Europe, with the espresso coffee machine the white coffee characterized by a measured amount in the cup of, on average, 120 cm³ and by a persistent straw-coloured creamy layer is prepared. In the United States, the consumption of a coffee known as "Americano" is very widespread and prepared by adding a measured amount of around 300 cm³ of hot water to a strong coffee prepared by the espresso technique; the texture of the creamy surface layer of the espresso should not however be compromised by the addition of the hot water.

The formation of the creamy layer with good quality characteristics of consistency and texture requires, for each specific type of dispensing, particular stratagems which, when using conventional machines of manual type, form part of the skill of the bartender; the bartender adapts the grind, adapts the manual pressing in the filter, and also adapts the height of the cup with respect to the spouts of the dispenser which, in conventional machines, are positioned immediately below the filter.

The machines equipped with fully automatic dispensers, on the other hand, are intended to be used by staff without specific training, and the adaptations for each type of coffee must be provided for in a standardized manner in the control program of the machine.

In machines of the fully automatic type there is then a physical limit to bringing the coffee into the cup with a cream of the same consistency and quality as a conventional type of machine.

According to the prior art, a machine for the preparation and automatic dispensing of coffee comprises an automatic infuser unit for espresso coffee, connected, via a pipe, to a spout which dispenses the coffee into a cup.

The constructional complexity of a fully automatic machine makes it necessary to place the dispensing spout at a certain distance from the body of the infuser unit and therefore connection via the coffee feed pipe becomes necessary. The need to serve the various types of coffee in various types of container, from a small cup, for dispensing Italian espresso, to a 300cm³ cardboard beaker, for dispensing so-called Americano coffee, has led for example to the development of dispensing spouts adaptable in height and, consequently, to the connection of the infuser unit via pipes of a flexible type.

In a particular manner, the coffees dispensed in weak doses, such as white coffee, and characterized by a high flow rate, tend, in the turbulent passage in these pipes, to lose part of the cream owing to bursting of the small bubbles and dispersion of the air and the aromas which are contained therein. It should also be noted that any addition of hot water for the dispensing of Americano coffee causes further damage to the creamy layer.

It is therefore an aim of the present invention to provide an automatic coffee machine capable of dispensing coffee without causing damage to the creamy layer produced by the infuser unit.

This aim is achieved by an automatic coffee machine according to claim 1.

The presence of valve means provided with springs and interposed between the inlet and the outlet of the dispensing spout makes it possible to maintain the coffee present in the coffee feed pipe under pressure at the spout itself and avoids the dispersion into the atmosphere of part of the air and of the aromas which are contained in the bubbles of the coffee cream.

Further characteristics and advantages of the automatic coffee machine according to the present invention will become clear from the following description of a preferred exemplary embodiment, provided by way of non-limiting example with reference to the appended drawings, in which:

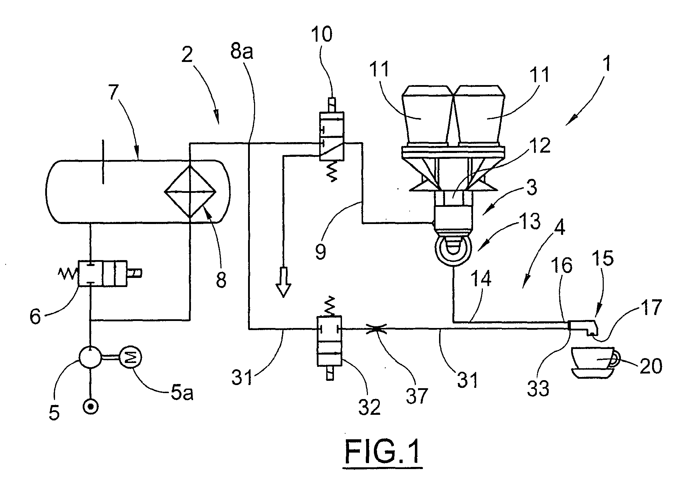

- Figure 1 shows a diagrammatic view of an automatic coffee machine according to the invention,
- Figure 2 shows a sectional view of the dispensing spout of the coffee machine of Figure 1,
- Figure 3 shows a sectional view of the dispensing spout of Figure 2a, along the section line A-A of Figure 2,
- Figure 4 shows a sectional view of a detail of Figures 2 and 3.

With reference to the appended drawings, the reference 1 indicates as a whole an automatic coffee machine according to the present invention.

The coffee machine 1 comprises hot water feed means 2, a unit for the preparation and automatic dispensing of coffee 3 suitable for receiving the hot water taken up by the feed means 2 in order to produce infused coffee, and dispensing means 4 suitable for dispensing the infused coffee produced by the dispensing unit 3 to a container 20, such as, for example, a coffee beaker of the North American type or a cup for espresso coffee of the European or Neapolitan type.

The unit for the preparation and dispensing of coffee 3 comprises one or more hoppers 11 for dispensing coffee beans to one or more grinding devices 12 which supply the ground coffee to infusion means 13 suitable for receiving the hot water fed by the feed means 2 in order to deliver the infused coffee to the dispensing means 4.

According to one embodiment, the hot water feed means 2 comprise a pump 5 actuated by a motor 5a and suitable for admitting water into a steam generator 7 and into a heat exchanger 8 positioned within the steam generator 7. The hot water feed means 2 also comprise a shutoff valve 6 suitable for regulating the admission of water into the steam generator 7.

The outlet 8a of the heat exchanger 8 is connected to the infusion means 13 via a water feed pipe 9 on which is placed a shutoff valve 10 which regulates the feeding of hot water to the infusion means 13.

The dispensing means 4 comprise a coffee feed pipe 14 connected to the outlet of the infusion means 13 and to a dispensing spout 15 having an inlet 16 connected to the coffee feed pipe 14, and an outlet 17 for dispensing the coffee to the container 20.

According to one embodiment, the outlet 17 of the dispensing spout 15 comprises a plurality of outlet apertures 17a. However, it should be noted that the outlet 17 of the dispensing spout 15 may be produced differently, depending on the specific requirements of the final client.

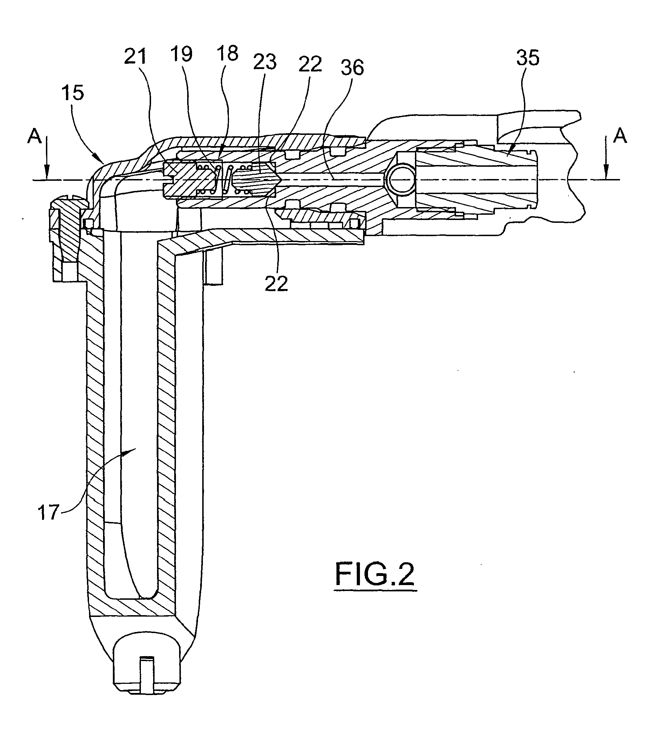

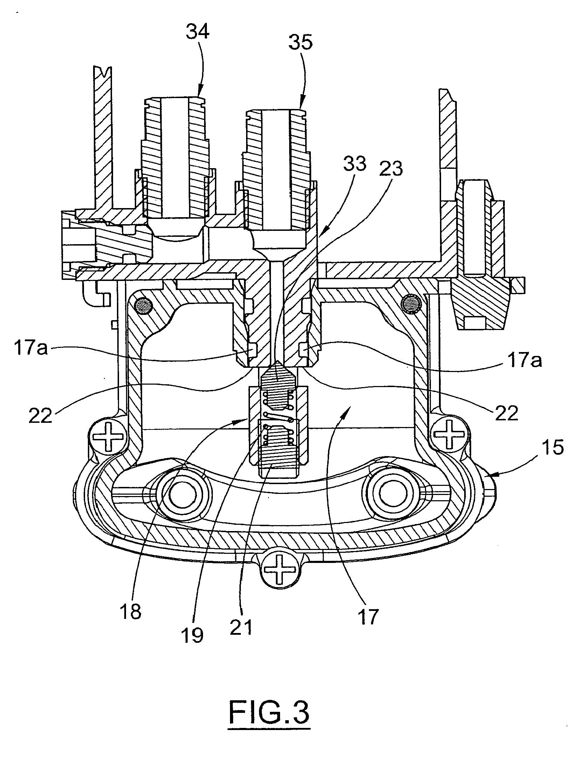

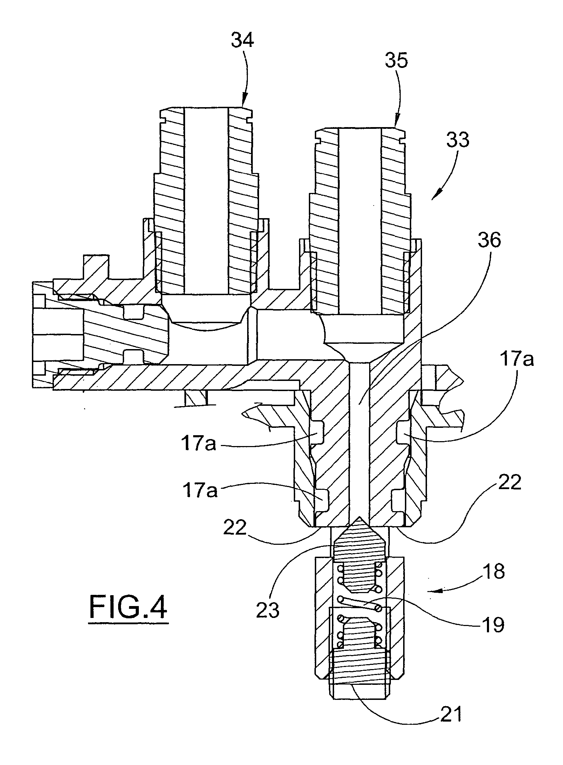

With reference to Figures 2, 3 and 4, the dispensing spout 15 comprises valve means 18 interposed between the inlet 16 and the outlet 17 and provided with resilient means 19, in the example a spring, having a predetermined resilient load. When the pressure of the coffee inside the coffee feed pipe 14 exceeds the resilient load of the spring 19, the valve means 18 open to allow the emergence of the coffee from the outlet 17 of the dispensing spout 15. Consequently, during the dispensing of the coffee, the coffee dispensed by the infusion means 13 is compressed in the coffee feed pipe 14 and, in order to emerge from the dispensing spout 15, must exert a pressure such as to oppose the resilient load of the spring 19. This ensures that the feed pipe 14 is always completely filled and that the bubbles of the coffee cream flow under pressure through the pipe 14 itself.

If, in the coffee feed pipe 14, crushing of the bubbles which form the coffee cream occurs, there is no dispersion of the contents of the bubbles. In fact, the presence of pressure in the coffee feed pipe 14 causes ever smaller bubbles to form, thus avoiding the dispersion into the atmosphere of part of the air and of the aromas which are contained therein.

According to one embodiment, the valve 18 comprises an abutment 22 and a shutter 23 abutting against the abutment 22 under the action of the resilient load of the spring 19 acting on the shutter 23 itself.

Advantageously, the resilient load of the spring 19 is adjustable so as to be able to vary the level of the pressure of the coffee present in the feed pipe 14 during delivery to the dispensing spout 15. According to one embodiment, the regulation of the resilient load of the spring 19 is effected by providing an adjusting screw 21 acting on the resilient spring 19 on the opposite side from the shutter 23. By rotating the adjusting screw 21, the point of abutment of the spring 19 on the opposite side from the shutter 23, and therefore the resilient load of the spring 19 itself, is modified. Alternatively, it is possible to provide for the adjustment of the abutment 22 of the shutter 23.

According to one embodiment, the automatic coffee machine 1 also makes it possible to dispense coffee of the North American type. To this end, the outlet of the heat exchanger 8 is connected to a second water feed pipe 31 on which is placed a shutoff valve 32 and a choke 37 suitable for regulating the inflow of hot water to be mixed with the coffee dispensed by the infusion means 13, in order to obtain a coffee of the North American type.

The pipe 31 is connected to the dispensing spout 15 in such a way as to mix the coffee fed by the coffee feed pipe 14 with the hot water fed by the pipe 31 itself.

According to the embodiment shown in the appended drawings, the connection of the coffee feed pipe 14 and of the hot water feed pipe 31 to the dispensing spout 15 is effected by means of a coupler 33.

The coupler 33 comprises a water inlet connection 34, suitable for being connected to the hot water feed pipe 31, a coffee inlet connection 35, suitable for connection to the coffee feed pipe 14 and a pipe 36 suitable for placing the inlet connections 34 and 35 in communication with the valve 18 and therefore intended to feed coffee mixed with hot water for dispensing American coffee.

Advantageously, the diameter of the pipe 36 is smaller than the diameter of the feed pipes for hot water 31 and coffee 14. In this way, the speed of the coffee in the pipe 36 in its passage towards the shutter 23 of the valve 18 increases.

The valve 18 opens under the thrust of the pressurized coffee via the pipe 36 and the coffee cream bubbles undergo a further refinement through the drawing of the coffee by the outlet apertures 17a of the dispensing spout 15.

As may be appreciated from what has been described, the automatic coffee machine according to the invention makes it possible to fulfil the requirements mentioned in the introduction of the present description and to remedy the drawbacks of the prior art.

In the case in point, the presence of valve means provided with springs and interposed between the inlet and the outlet of the spout makes it possible to maintain the coffee present in the coffee feed pipe under pressure at the spout itself and avoids the dispersion into the atmosphere of part of the air and of the aromas contained in the bubbles of the coffee cream.

In order to satisfy contingent and specific requirements, a person skilled in the art may apply to the automatic coffee machine according to the invention, described above, many modifications and variants, all however contained within the scope of protection of the invention as defined in the following claims.

## Claims

1. An automatic coffee machine (1) comprising:
- infusion means (13) suitable for producing infused coffee,
- a coffee feed pipe (14) connected to the outlet of said infusion means (13), and
- a dispensing spout (15) having an inlet (16) connected to said coffee feed pipe (14) and an outlet (17) for the dispensing of the coffee into a container (20),
**characterized in that**
said dispensing spout (14) comprises valve means (18) interposed between the inlet (16) and the outlet (17) of the dispensing spout (14), said valve means (18) comprising resilient means (19) having a predetermined resilient load such as to maintain the coffee present in said coffee feed pipe (14) under pressure and to allow the emergence of the coffee from the dispensing spout (15) when the pressure of the coffee in the coffee feed pipe (14) exceeds said predetermined resilient load.

2. An automatic coffee machine (1) according to claim 1, wherein said resilient means comprise a spring (19) and said valve means comprise a shutter (23) abutting against an abutment (22) under the action of the resilient load of the spring (19), said shutter (23) allowing the passage of the coffee towards the outlet (17) of the dispensing spout (15) when the pressure of the coffee in the coffee feed pipe (14) exceeds said predetermined resilient load.

3. An automatic coffee machine (1) according to claim 2, wherein said valve means comprise an adjusting screw (21) acting on said spring (19) and operable in rotation in order to modify the point of abutment of the spring (19) on the opposite side from the shutter (23).

4. An automatic coffee machine (1) according to any one of claims 1 to 3, wherein the resilient load of said resilient means (19) is adjustable.

5. An automatic coffee machine (1) according to any one of claims 1 to 4, comprising a hot water feed pipe (31) connected to the dispensing spout (15) in such a way as to mix the coffee fed by the coffee feed pipe (14) with the hot water fed by said hot water feed pipe (31).

6. An automatic coffee machine (1) according to claim 5, comprising a coupler (33) having a hot water inlet connection (34) suitable for connection to the hot water feed pipe (31), a coffee inlet connection (35) suitable for connection to the coffee feed pipe (14) and a pipe (36) suitable for placing said inlet connections (34, 35) in communication with said valve means (18) so as to mix the coffee fed by the coffee feed pipe (14) with the hot water fed by said hot water feed pipe (31).

7. An automatic coffee machine (1) according to claim 6, wherein the diameter of the pipe (36), suitable for placing the inlet connections (34, 35) in communication with the valve means (18), is smaller than the diameter of the feed pipes for hot water (31) and coffee (14) so as to increase the speed of the coffee in its passage towards the valve means (18).

8. An automatic coffee machine (1) according to any one of claims 1 to 7, wherein the outlet (17) of the dispensing spout (15) comprises a plurality of outlet apertures (17a).

9. An automatic coffee machine (1) according to any one of claims 1 to 8, comprising:
- hot water feed means (2),
- a unit for the preparation and automatic dispensing of coffee (3), comprising said infusion means (13) and suitable for receiving the hot water taken up by the feed means (2) in order to produce infused coffee,
- dispensing means (4) suitable for dispensing the infused coffee produced by the dispensing unit (3) to a container (20), said dispensing means (3) comprising said dispensing spout (15).

10. An automatic coffee machine (1) according to claim 9, wherein said unit for the preparation and automatic dispensing of coffee (3) comprises one or more hoppers (11) for dispensing coffee beans to one or more grinding devices (12) suitable for supplying ground coffee to said infusion means (13).
